(19) Europäisches Patentamt
European Patent Office
Office européen des brevets

(11) EP 4 310 051 A1

(12) **EUROPEAN PATENT APPLICATION**
published in accordance with Art. 153(4) EPC

(43) Date of publication:
**24.01.2024 Bulletin 2024/04**

(21) Application number: **22771812.9**

(22) Date of filing: **18.03.2022**

(51) International Patent Classification (IPC):
**C01B 21/068** (2006.01)    **C04B 35/584** (2006.01)

(52) Cooperative Patent Classification (CPC):
**C01B 21/068; C04B 35/584**

(86) International application number:
**PCT/KR2022/003813**

(87) International publication number:
**WO 2022/197146 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2021 KR 20210035999**

(71) Applicant: **Amotech Co., Ltd.**
**Incheon 21629 (KR)**

(72) Inventors:
• **PARK, Kyu Hwan**
  **Incheon 21629 (KR)**
• **CHEONG, Hun**
  **Incheon 21629 (KR)**

(74) Representative: **Frischknecht, Harry Ralph**
**Isler & Pedrazzini AG**
**Giesshübelstrasse 45**
**Postfach 1772**
**8027 Zürich (CH)**

(54) **METHOD FOR PREPARING SILICON NITRIDE POWDER FOR MANUFACTURING SUBSTRATE AND SILICON NITRIDE POWDER PREPARED THEREBY**

(57)    Provided is a method for preparing silicon nitride powder for manufacturing a substrate. The method for preparing silicon nitride powder for manufacturing a substrate, according to an embodiment of the present invention, comprises the steps of: preparing mixed raw material powder comprising metallic silicon powder and crystalline phase control powder; preparing the mixed raw material powder into granules having a predetermined particle size; nitrifying the granules at a predetermined temperature ranging from 1,200-1,500°C while nitrogen gas is applied to the granules at a predetermined pressure; and pulverizing the nitrified granules. According to the method, it is easy to realize powder having an $\alpha$ crystal phase at a desired level, and when this is realized as a substrate, a substrate having compact density can be manufactured.

EP 4 310 051 A1

**Description**

[Technical Field]

The present invention relates to silicon nitride powder, and more specifically to a method for preparing silicon nitride powder for manufacturing a substrate and silicon nitride powder prepared through the same.

[Background Art]

The silicon nitride sintered body is excellent in wear resistance, heat resistance, low thermal expansion resistance, thermal shock resistance and corrosion resistance to metals, and it has been conventionally used for various structural members such as gas turbine members, engine members, steelmaking machine members and the like. In addition, due to the high insulating properties and good heat dissipation properties, it has been used as a material for electrical components such as ceramic substrates and the like.

As a method of synthesizing silicon nitride powder for preparing such a silicon nitride sintered body, the imide pyrolysis method has been known, in which silicon tetrachloride and ammonia are reacted to form an imide intermediate, which is then thermally decomposed to obtain silicon nitride powder. The silicon nitride powder synthesized by this method is powder having a relatively uniform particle size and an average particle diameter of 1 $\mu$m or less, and it is $\alpha$-type silicon nitride powder having a high $\alpha$ formation rate. The $\alpha$-type silicon nitride powder undergoes a phase transition from the $\alpha$-type to the $\beta$-type during sintering by raising the sintering temperature, and as a result of this, for example, since it is possible to obtain a dense sintered body having a relative density exceeding 99%, it is currently widely used. However, this method requires expensive compounds as raw materials, and the preparation process is also very complicated, which is disadvantageous in the preparation cost and time.

Accordingly, as another method of preparing silicon nitride powder, research is continuing on the direct nitrifying method, which produces silicon nitride powder by nitrifying solid silicon to obtain an agglomerated mass and then pulverizing the same. This method has the advantage of relatively low raw material costs. However, this method also has a problem in improving the purity of the obtained silicon nitride powder. That is, in this method, the nitrifying reaction proceeds slowly from the surface at a low temperature where the silicon solid does not melt, and thus, it is known that it is advantageous to make the particle size of the silicon solid very small in advance, but rather, there is a concern that contaminants such as metal substances and the like that become impurities may be mixed during the pulverizing process to reduce the particle size of silicon solid, which is the raw material. In addition, when it is contaminated with contaminants, there is a problem of increased man-hours, extended manufacturing time and increased manufacturing costs as it must undergo acid washing to remove contaminants before nitrifying.

Furthermore, silicon is easily eluted during the nitrifying process, and in this case, there is a concern that the thermal conductivity and mechanical strength of the substrate may be rapidly reduced due to the melting and vaporization of silicon during sintering to be manufactured into a substrate.

[Disclosure]

[Technical Problem]

The present invention has been devised in view of the above points, and is directed to providing a method for preparing silicon nitride powder that is suitable for manufacturing a substrate having excellent mechanical strength while improving thermal conductivity during sintering as a substrate, and silicon nitride powder prepared by using the same.

[Technical Solution]

The present invention has been devised in view of the above points, and provides a method for preparing silicon nitride ($Si_3N_4$) powder for manufacturing a substrate, including the steps of preparing mixed raw material powder including silicon powder and crystalline phase control powder; preparing the mixed raw material powder into granules having a predetermined particle size by mixing with an organic binder; nitrifying the granules at a predetermined temperature ranging from 1,200 to 1,500°C while nitrogen gas is applied to the granules at a predetermined pressure; and pulverizing the nitrified granules.

According to an exemplary embodiment of the present invention, the metallic silicon powder may be obtained by dry-grounding a polycrystalline metallic silicon scrap or single-crystal silicon wafer scrap in order to minimize contamination with metal impurities during pulverizing.

In addition, the metallic silicon powder may have a resistivity of 1 to 100 S2cm.

In addition, the polycrystalline metallic silicon scrap or single-crystal silicon wafer scrap may have a purity of 99% or more.

In addition, the metallic silicon powder may have an average particle diameter of 0.5 to 4 $\mu$m, the rare earth element-containing compound powder may have an average particle diameter of 0.1 to 1 $\mu$m, and the magnesium-containing compound powder may have an average particle diameter of 0.1 to 1 $\mu$m.

In addition, the granules may have a D50 value of 100 $\mu$m or less, and more preferably, 20 to 55 $\mu$m.

In addition, the rare earth element-containing compound may be yttrium oxide, and the magnesium-containing compound may be magnesium oxide, and wherein the mixed raw material powder may include 2 to 5 mol% of yttrium oxide and 2 to 10 mol% of magnesium oxide.

In addition, during nitrifying, the nitrogen gas may be applied at a pressure of 0.1 to 0.2 MPa

In addition, during nitrifying, the temperature may be heated from 1,000°C or higher to a predetermined temperature at a temperature increasing rate of 0.5 to 10°C/min, and.

In addition, the present invention provides silicon nitride powder for manufacturing a substrate, which is prepared by the method according to the present invention, and includes 9 wt.% or less of polycrystalline silicon.

According to an exemplary embodiment of the present invention, the weight ratio of an $\alpha$ crystal phase in the total weight of an $\alpha$ crystal phase and a $\beta$ crystal phase may be 0.7 or more.

In addition, the present invention provides a composition for preparing silicon nitride powder, which is formed by granules having a predetermined particle diameter obtained by mixing mixed raw material powder including metallic silicon powder and crystalline phase control powder including a rare earth element-containing compound and a magnesium-containing compound with an organic binder.

According to an exemplary embodiment of the present invention, the granules may have a D50 value of 20 to 55 $\mu$m.

In addition, the present invention provides a silicon nitride substrate, which is manufactured by molding a slurry including the silicon nitride powder according to the present invention into a sheet shape and then sintering, wherein the thermal conductivity is 70W/mK or more, and the 3-point bending strength is 650 MPa or more.

[Advantageous Effects]

The method for preparing silicon nitride powder according to the present invention can easily implement the powder to have an $\alpha$ crystal phase at the desired level, and through this, when it is implemented as a substrate, it is possible to manufacture a substrate with dense density. In addition, since a secondary phase can be uniformly formed within the grain boundaries of the sintered substrate by using the same, it is possible to further improve the thermal conductivity of the manufactured substrate. Moreover, in the case of the silicon nitride powder according to the present invention, the content of impurities is small or none, and particularly, since it does not include eluted silicon, it is suitable for the manufacture of substrates with excellent thermal conductivity and mechanical strength.

[Best Mode]

Hereinafter, the exemplary embodiments of the present invention will be described in detail so that those of ordinary skill in the art can easily practice the invention. The present invention may be embodied in many different forms and is not limited to the exemplary embodiments described herein.

The method for preparing silicon nitride according to an exemplary embodiment of the present invention includes the steps of preparing mixed raw material powder including silicon powder and crystalline phase control powder including a rare earth element-containing compound and a magnesium-containing compound; preparing the mixed raw material powder into granules having a predetermined particle size by mixing with an organic binder; nitrifying the granules at a predetermined temperature ranging from 1,200 to 1,500°C while nitrogen gas is applied to the granules at a predetermined pressure; and pulverizing the nitrified granules.

First of all, in the method for producing silicon nitride powder, the step of preparing mixed raw material powder including silicon powder and crystalline phase control powder including a rare earth element-containing compound and a magnesium-containing compound will be described.

As the raw material powder, the metallic silicon powder, which is the main component, can be used without limitation in the case of metallic silicon powder that is capable of preparing silicon nitride powder through the direct nitrifying method. For example, the metallic silicon powder may be a polycrystalline metallic silicon scrap or single-crystal silicon wafer scrap. The polycrystalline metallic silicon scrap may be a by-product of polycrystalline metallic silicon used for manufacturing jigs for semiconductor processes or solar panels, and the single-crystal silicon wafer scrap may also a by-product during silicon wafer manufacturing, and accordingly, these scraps, which are by-products, may be used as raw material powder to thereby lower the manufacturing cost.

In addition, the polycrystalline metallic silicon scrap or single-crystal silicon wafer scrap may have a purity of 99% or more, and it may be more advantageous to ensure thermal conductivity and mechanical strength, when sintering the silicon nitride powder prepared through this as a substrate.

In addition, the metallic silicon powder may have a resistivity of 1 to 100 Qcm, and through this, it may be more advantageous in preparing silicon nitride powder having the desired physical properties of the present invention.

Meanwhile, the metallic silicon powder used as the raw material powder may be preferably a polycrystalline metallic silicon scrap or a single-crystal silicon wafer scrap that is pulverized to a predetermined size. In this case, in order to prevent contaminants such as metal impurities due to pulverizing from being mixed into the raw material powder, the pulverizing may be performed by using a dry grinding method, and specifically, the dry grinding method such as a disk mill, a pin mill or a jet mill may be used to perform powdering. If the contaminants are contained in the metallic silicon powder, there is a concern that manufacturing time and costs will increase as additional cleaning processes such as acid washing are required to remove contaminants. In this case, the average particle diameter of the pulverized metallic silicon powder may be 0.5 to 4 $\mu$m, and more preferably, 2 to 4 $\mu$m, and if the average particle diameter is less than 0.5 $\mu$m, it may be difficult to implement through the dry grinding method, and there is a concern that the possibility of mixing of contaminants may increase, and densification may be difficult during sheet casting. In addition, if the average particle diameter of the metallic silicon powder is more than 4 $\mu$m, nitrifying is not easy, and thus, there is a concern that a non-nitrified part may exist, and densification of the final substrate may be difficult.

Meanwhile, the silicon nitride to be implemented is difficult for self-diffusion and it may be thermally decomposed at high temperature, and thus, sintering is not easy with a substrate and the like for reasons such as limited sintering temperature, and it is difficult to implement a dense sintered body. Further, in order to solve these difficulties because it may be difficult to control the crystalline phase at the time of preparing silicon nitride powder using the direct nitrifying method and improve the physical properties of the substrate on which the silicon nitride powder is sintered by removing impurities such as oxygen and the like, mixed raw material powder which is mixed with crystalline phase control powder is used as the raw material powder. The crystalline phase control powder may include, for example, a rare earth element-containing compound, an alkaline earth metal oxide and a combination thereof, and specifically, at least one selected from the group consisting of magnesium oxide (MgO), yttrium oxide ($Y_2O_3$), gadolinium oxide ($Gd_2O$), holmium oxide ($Ho_2O_3$), erbium oxide ($Er_2O_3$), yrthenium oxide ($Yb_2O_3$) and dysprosium oxide ($Dy_2O_3$) may be used. However, in the present invention, magnesium oxide and yttrium oxide are essentially contained in the crystalline phase control powder in order to more easily control the crystalline phase of the silicon nitride powder, and the magnesium oxide and yttrium oxide have the advantages of implementing a more dense, high-density substrate when manufacturing a substrate using the prepared silicon nitride powder and further improving thermal conductivity by reducing the amount of residual grain boundary phases during sintering.

For example, the yttrium oxide may be included in an amount of 2 to 5 mol% and the magnesium oxide may be included in an amount of 2 to 10 mol% in the mixed raw material powder. If the yttrium oxide is less than 2 mol%, it may be difficult to implement a densified substrate when sintering the implemented silicon nitride powder as a substrate, and it is difficult to capture oxygen on the grain boundary, and as a result, since the amount of dissolved oxygen increases, the thermal conductivity of the sintered substrate may be low and the mechanical strength may also decrease. In addition, if the yttrium oxide is more than 5 mol%, the grain boundary phase increases such that the thermal conductivity of the sintered substrate of the implemented silicon nitride powder is lowered, and there is a concern that fracture toughness is lowered. In addition, if magnesium oxide is less than 2 mol%, both of the thermal conductivity and mechanical strength of the sintered substrate of the implemented silicon nitride powder may be low, there is a concern that silicon is eluted during nitrifying, and it may be difficult to manufacture a densified substrate. In addition, if the magnesium oxide is more than 10 mol%, the residual amount of magnesium at the grain boundary during sintering increases, and as a result, it may lower the thermal conductivity of the implemented sintered substrate, and there are problems in that sintering of the silicon nitride powder is not easy, and fracture toughness is reduced.

In addition, the rare earth element-containing compound powder may have an average particle diameter of 0.1 to 1 $\mu$m, and the magnesium-containing compound powder may have an average particle diameter of 0.1 to 1 $\mu$m, and through this, it may be more advantageous to achieve the object of the present invention.

Next, the step of preparing the mixed raw material powder into granules having a predetermined particle size by mixing the prepared mixed raw material with a solvent and an organic binder to form a slurry, and then spray drying.

Rather than directly nitrifying the mixed raw material powder, it is prepared into granules having a predetermined particle size, and then, the nitrifying process described below is performed on the granules, and through this, the crystalline phase of the prepared silicon nitride powder may be more easily controlled by increasing the mixing uniformity of the mixed raw material powder, and since it is possible to uniformly shape the secondary phase of $Si_2Y_2O_5$ within the grain boundaries of the sintered substrate, it is possible to prepare silicon nitride powder with uniform characteristics that can improve uniformity while further improving the thermal conductivity and mechanical strength of the sintered substrate.

The granules may have a D50 value of 100 $\mu$m or less, more preferably, 20 to 100 $\mu$m, still more preferably, 20 to 55 $\mu$m, and still more preferably, 20 to 40 $\mu$m, and if the D50 is more than 100 $\mu$m, nitrification does not occur completely due to poor inflow of nitrogen gas into the granules, and silicon that has not been nitrified may melt and elute out of the granules. In addition, when such silicon nitride powder is manufactured as a substrate, there is a concern that the silicon that was eluted during the preparation of the silicon nitride powder may again be eluted out of the substrate. Herein, D50 value refers to the value on a 50% volume basis as measured by using the laser diffraction scattering method.

Meanwhile, the granules may be obtained through the dry spraying method, and may be obtained by using known conditions and devices that are capable of performing the dry spraying method, and thus, the present invention is not particularly limited thereto. In addition, the mixed raw material powder is implemented as a slurry mixed with a solvent and an organic binder, and then subjected to dry spraying, and when performing slurring in order to implement the ceramic powder into granules, the solvent and organic binder may be used without limitation in the case of the solvent and organic binder that are used in slurring. For example, the solvent preferably includes at least one selected from ethanol, methanol, isopropanol, distilled water and acetone. In addition, it is preferable to use a polyvinyl butyral (PVB)-based binder as the organic binder. Meanwhile, when preparing granules, the organic binder is contained, but if it is contained in a trace amount, the separate degreasing process may not be performed before the nitrifying process described below.

Next, while applying nitrogen gas at a predetermined pressure to the obtained granules, the step of nitrifying at a predetermined temperature within the range of 1,200 to 1,500°C is performed.

In this case, during the nitrifying treatment, the nitrogen gas may be applied at a pressure of 0.1 to 0.2 MPa, and more preferably, at a pressure of 0.15 to 0.17 MPa. If the nitrogen gas pressure is less than 0.1 MPa, nitrification may not occur completely. In addition, when the nitrogen gas pressure is more than 0.2 MPa, a phenomenon in which silicon is eluted during the nitrifying process occurs. In addition, during the nitrifying treatment, it may be heated from 1,000°C or higher at a temperature increasing rate of 0.5 to 10°C/min to a predetermined temperature, and if the temperature increasing rate from 1,000°C or higher to the predetermined temperature is less than 0.5°C/min, the sintering time may be excessively extended. In addition, if the temperature increasing rate is more than 10°C/min, silicon may be eluted, making it difficult to prepare powder that is completely nitrified with silicon nitride.

In addition, the nitrifying temperature may be selected as a predetermined temperature within the range of 1,200 to 1,500°C, and if the predetermined temperature is less than 1,200°C, nitrification may not occur uniformly. In addition, since the $\beta$ crystal phase is rapidly formed when the predetermined temperature is more than 1,500°C, densification may be difficult when manufacturing a substrate using such silicon nitride powder. In addition, nitrification may be performed at the predetermined temperature for 30 minutes to 5 hours, and through this, it may be more advantageous to achieve the object of the present invention.

Next, the step of pulverizing the nitrified granules is performed.

As a step of preparing the nitrified granules into silicon nitride powder, the drying method may preferably be used to prevent mixing of contaminants during pulverizing, and for example, it may be performed through an air jet mill.

In addition, the present invention includes silicon nitride powder for manufacturing a substrate in which polycrystalline silicon derived from molten silicon is 8 wt.% or less, which is prepared by the preparation method according to the present invention, and since it is included at, preferably, 6 wt.% or less, more preferably, 4 wt.% or less, and still more preferably, 0 wt.%, it may be suitable for manufacturing a substrate having improved mechanical strength and thermal conductivity.

According to an exemplary embodiment of the present invention, the weight ratio of an $\alpha$ crystal phase in the total weight of an $\alpha$ crystal phase and a $\beta$ crystal phase may be 0.7 or more, and if the weight ratio of the $\alpha$ crystal phase in the total weight of the $\alpha$ crystal phase and the $\beta$ crystal phase is less than 0.7, it may be difficult to increase the compactness of the substrate which is sintered through the silicon nitride powder, and it may be difficult to improve thermal conductivity and mechanical strength, and particularly, it may be difficult to improve mechanical strength.

In addition, the silicon nitride powder may more uniformly form a secondary phase of $Si_2Y_2O_5$ on the grain boundary of the substrate sintered body which is implemented therefrom, and through this, it is possible to express a synergistic effect in improving the thermal conductivity of the substrate.

In addition, the silicon nitride powder may have an average particle diameter of 2 to 4 $\mu$m, and through this, it may be more advantageous in implementing a substrate having improved mechanical strength and thermal conductivity.

In addition, the present invention includes a silicon nitride substrate which is manufactured by molding a slurry including silicon nitride powder prepared by the preparation method according to the present invention into a sheet shape and then sintering, wherein the thermal conductivity is 70 W/mK or more, preferably, 80 W/mK or more, and more preferably, 90 W/mK or more, and the 3-point bending strength is 650 MPa or more, preferably, 680 MPa or more, and more preferably, 700 MPa or more. In addition, since the silicon nitride substrate has excellent uniformity, the standard deviation of thermal conductivity measured for each piece after dividing the silicon nitride sintered body into 10 equal parts may be 5 W/mK or less, and more preferably, 3 W/mK or less, and the standard deviation of the 3-point bending strength may be 25 MPa or less, and more preferably, 20 MPa or more. In addition, the silicon nitride substrate may have a sintered density of 3.0 g/cm$^3$ or more, and more preferably, 3.2 g/cm$^3$ or more.

The silicon nitride substrate may be manufactured by a known method in which a slurry including silicon nitride powder is molded into a sheet shape and then sintered, and for example, the slurry may be molded into a sheet shape through the tape casting method.

In addition, the slurry may further contain a solvent and an organic binder. As the solvent, an organic solvent may be used to dissolve the organic binder and disperse the silicon nitride powder to adjust the viscosity, and as the organic solvent, a material that is capable of dissolving the organic binder may be used, and for example, terpineol, dihydro terpineol (DHT), dihydro terpineol acetate (DHTA), butyl carbitol acetate (BCA), ethylene glycol, ethylene, isobutyl alcohol, methylethyl ketone, butyl carbytol, texanol (2,2,4-trimethyl-1,3-pentanediolmonoisobutyrate), ethylbenzene, isopropylbenzene, cyclohexanone, cyclopentanone, dimethyl sulfoxide, diethyl phthalate, toluene, mixtures thereof, and the like may be used. In this case, it is preferable to mix 50 to 100 parts by weight of the solvent based on 100 parts by weight of the silicon nitride powder. If the content of the solvent is less than 50 parts by weight, the viscosity of the slurry is high such that it may be difficult to perform tape casting, and it may be difficult to control the coating thickness. In addition, if the content of the solvent is more than 100 parts by weight, the viscosity of the slurry is too thin such that it takes a long period of time to dry, and it may be difficult to control the thickness of the coating.

In addition, it is preferable to mix 5 to 20 parts by weight of the organic binder based on 100 parts by weight of the silicon nitride powder. The organic binder may be a cellulose derivative such as ethyl cellulose, methyl cellulose, nitrocellulose or carboxycellulose, or a polymer resin such as polyvinyl alcohol, acrylic acid ester, methacrylic acid ester or polyvinyl butyral, and in consideration of forming a sheet-shaped molded body by the tape casting method, polyvinyl butyral may be used as the organic binder.

Meanwhile, the slurry may further include a known material that is contained in the slurry for forming a sheet, such as a dispersant and a plasticizer, and the present invention is not particularly limited thereto. The molded sheet may be sintered at a temperature of 1800 to 1900°C to 0.5 to 1.0 MPa, and through this, it may be more advantageous to implement a high-quality silicon nitride substrate.

[Modes of the Invention]

The present invention will be described in more detail through the following examples, but the following examples are not intended to limit the scope of the present invention, which should be construed to aid understanding of the present invention.

<Example 1>

A polycrystalline silicon scrap (purity 99.99%, resistivity 1 Qcm) derived from a jig for semiconductor process was dry pulverized by using a jet mill to prepare metallic silicon powder having an average particle diameter of 4 $\mu$m. Herein, 2 mol% of yttrium oxide having an average particle diameter of 0.5 $\mu$m and 5 mol% of magnesium oxide having an average particle diameter of 0.5 $\mu$m were mixed to prepare mixed raw material powder. 100 parts by weight of the prepared mixed raw material powder was mixed with 80 parts by weight of ethanol as a solvent and 10 parts by weight of polyvinyl butyral as an organic binder to prepare a slurry for preparing granules, and it was spray-dried by using a thermal spray device to prepare granules with a D50 value of 20 $\mu$m. The prepared granules were heat-treated at a nitrogen gas pressure of 0.15 MPa, and specifically, heat treatment was performed by setting the temperature increasing rate at 5°C/min up to 1,000°C and setting the temperature increasing rate at 0.5°C/min from 1,000°C to 1,400°C, followed by heat treatment at 1,400°C for 2 hours to obtain nitrified granules, and these were pulverized through an air jet mill to obtain silicon nitride powder having an average particle diameter of 2 $\mu$m as shown in Table 1 below.

Afterwards, 5 parts by weight of polyvinyl butyral resin and 50 parts by weight of a solvent obtained by mixing toluene and ethanol at a ratio of 5:5 based on 100 parts by weight of the obtained silicon nitride powder were mixed, dissolved and dispersed in a ball mill. Thereafter, the prepared slurry was prepared in a sheet shape through the conventional tape casting method and then formed into a 170 $\mu$m sheet shape, and then, four prepared sheets were cross-laminated and heat-treated at 1,900°C for 4 hours under a nitrogen atmosphere to manufacture a silicon nitride substrate as shown in Table 1.

<Comparative Example 1>

The silicon nitride substrate as shown in Table 1 below was manufactured in the same manner as in Example 1, except that the mixed raw material powder was not implemented as granules, but obtained as silicon nitride powder.

<Experimental Example 1>

The following physical properties were evaluated for the silicon nitride powder or silicon nitride substrate manufactured in Example 1 and Comparative Example 1, and the results are shown in Table 1 below.

1. D50

The 50% volume reference value as measured by using the laser diffraction scattering method was set to the D50 value.

2. Sintered density

The sintered density of the manufactured substrate was measured by the Archimedes method.

3. Thermal conductivity and uniformity

After preparing the manufactured substrate as a total of 10 specimens for each of the example and comparative example, the thermal conductivity was measured by the KS L 1604 (ISO 18755, ASTM E 1461) method, and then, the mean value and standard deviation of the measured values were calculated, and as the standard deviation is close to 0, it means that the thermal conductivity is uniform.

4. 3-Point bending strength and uniformity

The 3-point bending strength (S) of the manufactured substrate after preparing a total of 10 specimens for each of the example and comparative example was measured by the KS L 1590 (ISO 14704) method, and then substituted into the formula below to calculate the mean value and standard deviation. As the standard deviation of the 3-point bending strength is close to 0, it means that the 3-point bending strength is uniform.

$$[Formula]$$

$$S = 3PL/(2bd^2)$$

wherein in the Formula, P is the breaking load, L is the distance between points, b is the width of the beam, and d is the thickness of the beam.

[Table 1]

| | | | Example 1 | Comparative Example 1 |
|---|---|---|---|---|
| Mixed raw material powder | MgO (mol%) | | 5 | 5 |
| | $Y_2O_3$ (mol%) | | 2 | 2 |
| Granule D50 ($\mu$m) | | | 20 | - |
| Nitrifying conditions | Nitrogen gas pressure(MPa) | | 0.15 | 0.15 |
| | Temperature increasing rate from 1,000°C to nitrifying temperature (°C/min) | | 0.5 | 0.5 |
| | Nitrifying temperature (°C) | | 1400 | 1400 |
| Silicon nitride substrate | Sintered density (g/cm$^3$) | | 3.21 | 3.21 |
| | Thermal conductivity (W/mK) | Mean value | 94 | 81 |
| | | Standard deviation | 3 | 8 |
| | 3-Point bending strength (MPa) | Mean value | 680 | 550 |
| | | Standard deviation | 20 | 50 |

As can be confirmed from Table 1, it can be seen that the silicon nitride substrate according to Example 1 has excellent thermal conductivity and 3-point bending strength and exhibits uniform characteristics compared to the silicon nitride substrate according to Comparative Example 1, and this is expected to be a result of the granulation of the silicon nitride powder used in the manufacture of silicon nitride substrates and the resulting increase in nitrification uniformity.

<Examples 2 to 9>

Silicon nitride powder and silicon nitride substrates as shown in Table 2 or Table 3 were manufactured in the same manner as in Example 1, except that silicon nitride powder was obtained by changing the content of ingredients, D50 value of granules, nitriding conditions and the like in the mixed raw material powder as shown in Table 2 or Table 3 below.

<Experimental Example 2>

The following physical properties were evaluated for the silicon nitride powder or silicon nitride substrate manufactured in Examples 1 to 9, and the results are shown in Table 2 or Table 3 below.

1. Crystalline phase

For the silicon nitride powder, $\alpha$ and $\beta$ crystal phases were quantified through the XRD measurement, and the weight ratio of the $\alpha$ crystal phase was calculated through the following formula.

$$\text{Weight ratio of } \alpha \text{ crystal phase} = \alpha/(\alpha+\beta)$$

2. D50

The 50% volume reference value as measured by using the laser diffraction scattering method was set to the D50 value.

3. Sintered density

The sintered density of the manufactured substrate was measured by the Archimedes method.

4. Thermal conductivity

For 10 substrates manufactured in each example, the thermal conductivity was measured by the KS L 1604 (ISO 18755, ASTM E 1461) method, and the mean value of the measured values was calculated.

5. 3-Point bending strength

The 3-point bending strength (S) for 10 substrates manufactured in each example was measured by the KS L 1590 (ISO 14704) method and calculated by the following formula, and the mean value of the calculated values was calculated.

[Formula]

$$S = 3PL/(2bd^2)$$

wherein in the Formula, P is the breaking load, L is the distance between points, b is the width of the beam, and d is the thickness of the beam.

[Table 2]

| | | Example 1 | Example 2 | Example 3 | Example 4 | Example 5 | Example 6 |
|---|---|---|---|---|---|---|---|
| Mixed raw material powder | MgO (mol%) | 5 | 5 | 5 | 5 | 5 | 5 |
| | $Y_2O_3$ (mol%) | 2 | 2 | 2 | 2 | 2 | 2 |
| Granule D50 ($\mu$m) | | 20 | 30 | 40 | 60 | 80 | 100 |

(continued)

|  |  | Example 1 | Example 2 | Example 3 | Example 4 | Example 5 | Example 6 |
|---|---|---|---|---|---|---|---|
| Nitrifying conditions | Nitrogen gas pressure (MPa) | 0.15 | 0.15 | 0.15 | 0.15 | 0.15 | 0.15 |
|  | Temperature increasing rate from 1,000°C to nitrifying temperature (°C/min) | 0.5 | 0.5 | 0.5 | 0.5 | 0.5 | 0.5 |
|  | Nitrifying temperature (°C) | 1400 | 1400 | 1400 | 1400 | 1400 | 1400 |
| Silicon nitride powder | Weight ratio of $\alpha$ crystal phase [$\alpha/(\alpha+\beta)$] | 0.97 | 0.92 | 0.87 | 0.85 | 0.78 | 0.70 |
|  | Eluted Si (wt.%) | 0 | 0 | 0 | 4 | 8 | 9 |
| Silicon nitride substrate | Sintered density (g/cm$^3$) | 3.21 | 3.20 | 3.17 | 3.01 | 2.92 | 2.94 |
|  | Thermal conductivity (W/mK) | 94 | 82 | 77 | 62 | 58 | 53 |
|  | 3-Point bending strength (MPa) | 680 | 750 | 650 | 460 | 420 | 380 |

[Table 3]

|  |  | Example 7 | Example 8 | Example 9 |
|---|---|---|---|---|
| Mixed raw material powder | MgO (mol%) | 7 | 10 | 15 |
|  | Y$_2$O$_3$ (mol%) | 2 | 2 | 2 |
| Granule D50 ($\mu$m) |  | 32 | 32 | 32 |
| Nitrifying conditions | Nitrogen gas pressure (MPa) | 0.15 | 0.15 | 0.15 |
|  | Temperature increasing rate from 1,000°C to nitrifying temperature (°C/min) | 0.5 | 0.5 | 0.5 |
|  | Nitrifying temperature (°C) | 1400 | 1400 | 1400 |
| Silicon nitride powder | Weight ratio of $\alpha$ crystal phase [$\alpha/(\alpha+\beta)$] | 0.79 | 0.92 | 0.95 |
|  | Eluted Si (wt.%) | 0 | 0 | 0 |
| Silicon nitride substrate | Sintered density (g/cm$^3$) | 3.21 | 3.21 | 3.20 |
|  | Thermal conductivity (W/mK) | 121 | 87 | 82 |
|  | 3-Point bending strength (MPa) | 750 | 720 | 680 |

As can be confirmed from Tables 2 and 3, the examples confirmed that it is very suitable powder for improving the thermal conductivity and 3-point bending strength of substrates manufactured by using silicon nitride powder obtained by preparing mixed raw material powder into granules having an appropriate size and then nitrifying the same. However, as shown in Example 6, if the size of the granules is large, the content of silicon eluted from the silicon nitride powder may be high, and in this case, it may be insufficient to improve the mechanical strength and thermal conductivity of the manufactured substrate.

Although an exemplary embodiment of the present invention has been described above, the spirit of the present invention is not limited to the exemplary embodiments presented herein, and those skilled in the art who understand the spirit of the present invention may easily suggest other exemplary embodiments by modifying, changing, deleting or adding components within the scope of the same spirit, but this will also fall within the scope of the present invention.

**Claims**

1. A method for preparing silicon nitride ($Si_3N_4$) powder for manufacturing a substrate, comprising the steps of:

preparing mixed raw material powder comprising metallic silicon powder and crystalline phase control powder comprising a rare earth element-containing compound and a magnesium-containing compound;
preparing the mixed raw material powder into granules having a predetermined particle size by mixing with an organic binder;
nitrifying the granules at a predetermined temperature ranging from 1,200 to 1,500°C while nitrogen gas is applied to the granules at a predetermined pressure; and
pulverizing the nitrified granules.

2. The method of claim 1, wherein the metallic silicon powder is obtained by dry-grounding a polycrystalline metallic silicon scrap or single-crystal silicon wafer scrap in order to minimize contamination with metal impurities during pulverizing.

3. The method of claim 1, wherein the metallic silicon powder has a resistivity of 1 to 100 $\Omega$cm.

4. The method of claim 2, wherein the polycrystalline metallic silicon scrap or single-crystal silicon wafer scrap has a purity of 99% or more.

5. The method of claim 1, wherein the metallic silicon powder has an average particle diameter of 0.5 to 4 $\mu$m, the rare earth element-containing compound powder has an average particle diameter of 0.1 to 1 $\mu$m, and the magnesium-containing compound powder has an average particle diameter of 0.1 to 1 $\mu$m.

6. The method of claim 1, wherein the granules have a D50 value of 20 to 55 $\mu$m.

7. The method of claim 1, wherein the rare earth element-containing compound is yttrium oxide, and the magnesium-containing compound is magnesium oxide, and
wherein the mixed raw material powder comprises 2 to 5 mol% of yttrium oxide and 2 to 10 mol% of magnesium oxide.

8. The method of claim 1, wherein during nitrifying, the temperature is heated from 1,000°C or higher to a predetermined temperature at a temperature increasing rate of 0.5 to 10°C/min, and the nitrogen gas is applied at a pressure of 0.1 to 0.2 MPa.

9. Silicon nitride powder for manufacturing a substrate, which is prepared by the method according to any one of claims 1 to 8, and comprises 9 wt.% or less of polycrystalline silicon.

10. The silicon nitride powder of claim 9, wherein the weight ratio of an $\alpha$ crystal phase in the total weight of an $\alpha$ crystal phase and a $\beta$ crystal phase is 0.7 or more.

11. A composition for preparing silicon nitride powder, which is formed by granules having a predetermined particle diameter obtained by mixing mixed raw material powder comprising metallic silicon powder and crystalline phase control powder comprising a rare earth element-containing compound and a magnesium-containing compound with an organic binder.

12. The composition of claim 11, wherein the granules have a D50 value of 20 to 55 $\mu$m.

13. A silicon nitride substrate, which is manufactured by molding a slurry comprising the silicon nitride powder according to claim 9 into a sheet shape and then sintering.

14. The silicon nitride substrate of claim 13, wherein the thermal conductivity is 70W/mK or more, and the 3-point bending strength is 650 MPa or more.

## INTERNATIONAL SEARCH REPORT

| International application No. |
| --- |
| **PCT/KR2022/003813** |

| A. | CLASSIFICATION OF SUBJECT MATTER |
| --- | --- |

**C01B 21/068**(2006.01)i; **C04B 35/584**(2006.01)i

According to International Patent Classification (IPC) or to both national classification and IPC

| B. | FIELDS SEARCHED |
| --- | --- |

Minimum documentation searched (classification system followed by classification symbols)

C01B 21/068(2006.01); B01J 6/00(2006.01); B32B 18/00(2006.01); C01B 21/06(2006.01); C04B 35/584(2006.01); C04B 35/591(2006.01); C04B 35/622(2006.01); C04B 35/64(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 질화규소(silicon nitride), 희토류(rare earth elements), 마그네슘(magnesium), 그래뉼(granule), 기판(substrate)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2011-0050845 A (KOREA INSTITUTE OF MACHINERY & MATERIALS) 17 May 2011 (2011-05-17)<br>See paragraphs [0034]-[0035], [0037], [0039], [0042], [0046], [0048] and [0050]. | 1-14 |
| Y | KR 10-2017-0135105 A (KOREA INSTITUTE OF CERAMIC ENGINEERING AND TECHNOLOGY) 08 December 2017 (2017-12-08)<br>See paragraph [0009]; experimental example 1; and claims 1 and 11. | 1-14 |
| A | KR 10-2016-0111005 A (JAPAN FINE CERAMICS CO., LTD.) 23 September 2016 (2016-09-23)<br>See entire document. | 1-14 |
| A | KR 10-2017-0060970 A (AGENCY FOR DEFENSE DEVELOPMENT) 02 June 2017 (2017-06-02)<br>See entire document. | 1-14 |
| A | US 4117095 A (KOMEYA, Katsutoshi et al.) 26 September 1978 (1978-09-26)<br>See entire document. | 1-14 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **22 June 2022** | **22 June 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2022/003813**

| Patent document cited in search report | | | Publication date (day/month/year) | Patent family member(s) | | | Publication date (day/month/year) |
|---|---|---|---|---|---|---|---|
| KR | 10-2011-0050845 | A | 17 May 2011 | KR | 10-1140352 | B1 | 03 May 2012 |
| | | | | KR | 10-1140353 | B1 | 03 May 2012 |
| | | | | KR | 10-1155549 | B1 | 19 June 2012 |
| | | | | KR | 10-1212638 | B1 | 14 December 2012 |
| | | | | KR | 10-2011-0057691 | A | 01 June 2011 |
| | | | | KR | 10-2011-0083009 | A | 20 July 2011 |
| | | | | US | 2011-0111205 | A1 | 12 May 2011 |
| | | | | US | 2014-0035206 | A1 | 06 February 2014 |
| | | | | US | 8808614 | B2 | 19 August 2014 |
| KR | 10-2017-0135105 | A | 08 December 2017 | | None | | |
| KR | 10-2016-0111005 | A | 23 September 2016 | CN | 106132908 | A | 16 November 2016 |
| | | | | CN | 106132908 | B | 25 August 2017 |
| | | | | JP | 2015-199657 | A | 12 November 2015 |
| | | | | JP | 5836522 | B2 | 24 December 2015 |
| | | | | KR | 10-1751531 | B1 | 27 June 2017 |
| | | | | US | 2016-0362592 | A1 | 15 December 2016 |
| | | | | US | 9938444 | B2 | 10 April 2018 |
| | | | | WO | 2015-152292 | A1 | 08 October 2015 |
| KR | 10-2017-0060970 | A | 02 June 2017 | KR | 10-2017-0109515 | A | 29 September 2017 |
| US | 4117095 | A | 26 September 1978 | JP | 52-038500 | A | 25 March 1977 |
| | | | | JP | 54-013240 | B | 29 May 1979 |

Form PCT/ISA/210 (patent family annex) (July 2019)